# EUROPEAN PATENT SPECIFICATION

(11) **EP 2 727 822 B1**
(45) Date of publication and mention of the grant of the patent: **11.03.2020**
(21) Application number: 13191824.5
(22) Date of filing: 06.11.2013
(51) Int. Cl.: B64C 1/10, B64D 11/04

(54) **Aircraft having a recessed cavity in an aft pressure bulkhead wall surface and a galley moved rearwardly into the recessed cavity increasing floor space in front of the galley**
Flugzeug mit ausgespartem Hohlraum in einer Nachdruck-Druckschott-Wandfläche und Bordküche, die nach hinten in den ausgesparten Hohlraum bewegt wird, um den Bodenraum vor der Bordküche zu vergrößern
Aéronef possédant une cavité évidée sur une surface de paroi de cloison de pression arrière et office déplacé vers l'arrière dans la cavité agrandissant la surface au sol devant ledit office

(30) Priority: 06.11.2012 US 201213669850
(43) Date of publication of application: 07.05.2014
(73) Proprietor: The Boeing Company, Chicago, IL 60606-1596 (US)
(72) Inventor: Boren, Kelly L., Seattle, WA 98124 (US); Campbell, Lowel B., Seattle, WA 98124 (US); Prichard, Alan K., Seattle, WA 98124 (US)
(74) Representative: Boult Wade Tennant LLP

(56) References cited:
- WO-A1-01/23254
- FR-A1- 2 945 027
- US-A- 4 055 317
- US-A1- 2009 261 200
- US-A1- 2009 308 973
- US-B1- 6 378 805
- US-B2- 8 181 909

## Description

### FIELD OF THE INVENTION

The present invention pertains to an aircraft cabin that has been reconfigured to increase the floor space of the aircraft cabin. In particular, the present invention pertains to an aircraft cabin having a rear fuselage galley and a modified rear bulkhead that enables the galley to be moved rearwardly to provide additional floor space inside the cabin.

### BACKGROUND

Commercial aircraft set up for the transportation of passengers typically include rows of seats along the length of the aircraft cabin and one or more aisles that extend the length of the aircraft between the rows of seats. Some aircraft have a cross aisle at the rear of the aircraft that extends between a pair of boarding doorways in the opposite sides of the aircraft and a galley at the rear of the aircraft adjacent the cross aisle. The traditional positioning of the galley in the aircraft cabin often requires that a portion of the galley project out into the cross aisle of the aircraft cabin. Thus, the galley can prove to be an impediment to passengers comfortably moving along the cross aisle when boarding or exiting the aircraft.

In US 6 378 805 B1, there is described a pressure frame, designed in particular for an aircraft, including a dome-shaped cover made of composite materials reinforced with fibers, preferably in one single piece, and cover reinforcing devices connected to the cover or produced integrally therewith. To reduce weight and cost while still fulfilling strain requirements, particularly of large aircraft, and to reduce the risk of destruction due to the cover being turned inside out towards the inside of the aircraft, the cover is of essentially uniform thickness and includes at least one cover reinforcing device which is mounted in the central area on the concave side of the cover. This cover reinforcing device in the central area is formed by a reinforcing structure oriented against the curvature of the cover, such as at truncated cone-shaped, mug-shaped or parabolic structure, with a cavity being arranged between the cover and the reinforcing structure.

In US 4 055 317 A, there is described a galley for storing and preparing food for on-board service in a passenger aircraft that has its main floor located in the aft portion of the fuselage and raised above the main passenger deck. The distance between the ceiling of the main passenger deck and the floor is sufficient to provide head room for personnel using the galley. The airplane has a rearwardly concave, spherically-shaped pressure bulkhead positioned in the aft of the fuselage. The floor of the galley abuts the spherical bulkhead to take advantage of the increased floor space provided by the concave portion of the bulkhead. The galley includes facilities for preparing food stored in modular, portable containers and mobile service carts. The service carts are normally stored in recesses provided below countertop level in the galley when not in use. The modular containers and service carts are lifted between the galley floor and the main passenger deck by a lift proportioned to accommodate a mobile service cart or single modular unit. A stairway interconnects the main passenger deck and the galley floor for galley ingress and egress by service personnel. Additional modular unit storage is provided in the forwardly facing portion of the galley between the galley floor and the floor of the main passenger deck.

### SUMMARY

In a first aspect, the present invention provides an aircraft according to claim 1.

The aircraft of the present invention overcomes the disadvantages associated with prior art aircraft having galleys that project into a cross aisle as discussed above. This is accomplished by reconfiguring the aft pressure bulkhead of the aircraft to enable the galley of the aircraft to be moved rearwardly of the cross aisle. This increases the floor space of the aircraft.

The aft pressure bulkhead of the aircraft of the invention is redesigned with a recessed cavity in a central area of the bulkhead. The recessed cavity is aligned with the galley of the aircraft cabin and is dimensioned to receive portions of the galley. This enables the galley to be positioned rearwardly of the cross aisle and rearwardly of the boarding doors at the laterally opposite ends of the cross aisle. The galley being moved rearwardly of the cross aisle provides clear access to the two boarding doors at the opposite ends of the cross aisle and increases the floor space of the aircraft.

The aircraft further comprises a plurality of vertically oriented members attached to the wall, the members having a plurality of horizontal support members interconnecting the vertical members wherein at least one pair of vertical members and one pair of horizontal support members define a volume sufficient to accept a portion of a galley cart.

The horizontal support members are substantially orthogonal to the vertical members.

Preferably the wall is positioned on an aft side of the support members, the wall being substantially flat across its area.

Preferably the wall is substantially flat across its area.

Preferably the wall is continuous across its area and extends orthogonally between support members, the wall defining a volume between the support members the volume sufficient to accept a portion of a galley cart.

Preferably the aircraft further comprises a galley cart located in the volume between the support members and on the floor surface that extends between the support members.

Preferably the aircraft further comprises the aft pressure bulkhead having a continuous wall surface having a plurality of cavities defining volumes between the support members, the wall positioned adjacent to the galley.

Preferably the galley has a floor surface that extends into the cavities.

Preferably the aircraft comprises a pair of aft most boarding doorways in laterally opposite sides of the rear of the aircraft fuselage; and, the galley cart compartment being positioned entirely rearwardly of the pair of aft most boarding doorways.

Preferably, the aircraft further comprises a wall surface being a continuous surface supported by a plurality of structural beams, the structural beams being positioned such that at least two are at least 12 inches (0.3 meters) apart and connected by two cross beams that are at least 40 inches (1 meter) apart. Preferably the wall surface is the aforementioned wall or continuous wall surface.

Preferably the galley has a pair of galley walls on laterally opposite sides of the galley with rearward portions of the pair of galley walls extending rearwardly through the aft pressure bulkhead forward wall surface and forming laterally opposite sides of the recessed cavity in the aft pressure bulkhead forward wall surface.

In a second aspect, according to claim 10, the present invention provides a method of increasing the floor space in an aircraft cabin comprising:
positioning an aft pressure bulkhead at a rear of the aircraft cabin, the aft pressure bulkhead having a front wall surface extending across the aircraft cabin and extending upwardly from a floor surface of the aircraft cabin, the bulkhead having;
a recessed cavity in the wall surface, the recessed cavity extending rearwardly into the wall surface; and,
positioning the floor surface into the recessed cavity.

Preferably the method further comprises extending the floor space rearwardly of the aft pressure bulkhead wall surface.

Preferably the method further comprises temporarily positioning a galley cart in the recessed cavity with a portion of the galley cart extending rearwardly of the aft pressure bulkhead wall surface.

The method further comprises supporting the aft pressure bulkhead wall surface with vertical beams and positioning the recessed cavity between a pair of the vertical beams.

The features, functions, and advantages that have been discussed can be achieved independently in various embodiments or may be combined in yet other embodiments, further details of which can be seen with reference to the following description and drawings.

### BRIEF DESCRIPTION OF THE DRAWINGS

Figure 1 is a representation of the floor plan at the rear of the aircraft of the invention with the repositioned galley of the invention.
Figure 2 is a partial perspective view of the aft pressure bulkhead of the invention and the floor surface of the aircraft cabin.
Figure 3 is a view similar to Figure 2, but showing galley carts inserted into the recessed cavity in the aft pressure bulkhead.
Figure 4 is a partial perspective view of the aft pressure bulkhead of the invention and the floor surface of the aircraft cabin.

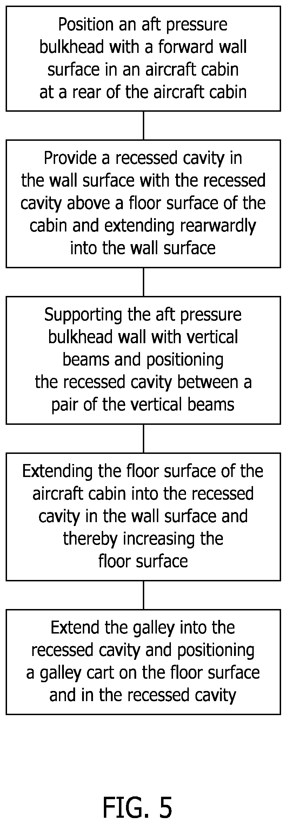

Figure 5 is a flow chart representing a method of providing a recessed cavity in an aft pressure bulkhead to increase the floor space of an aircraft.

### DESCRIPTION

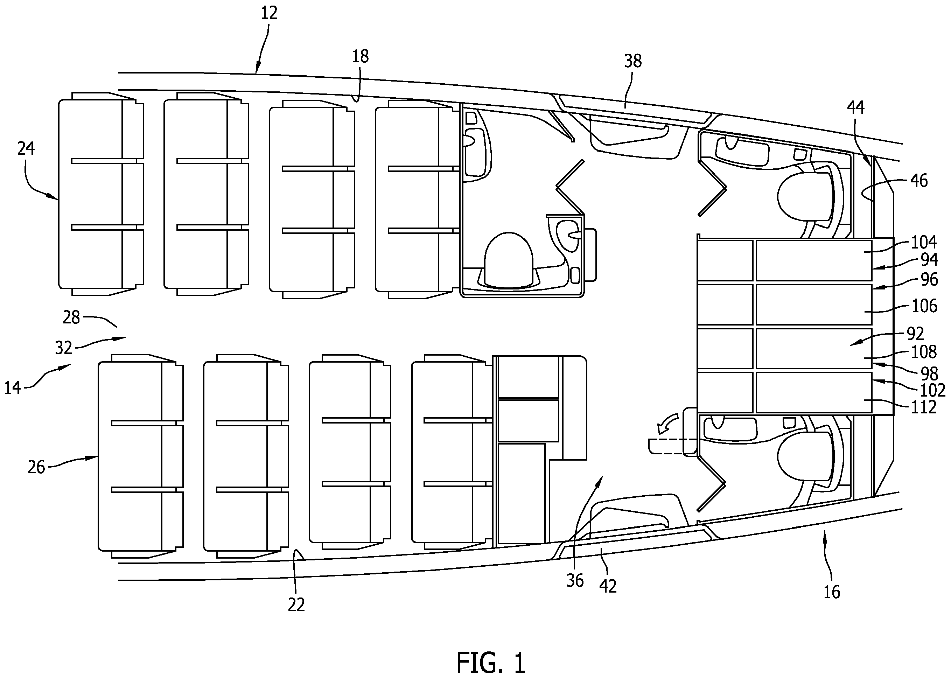

Figure 1 is a representation of the floor plan at the rear of the aircraft of the invention with the repositioned galley of the invention. The aircraft cabin has a longitudinal length between a front 14 of the cabin and a rear 16 of the cabin. The cabin also has a lateral width between opposite first 18 and second 22 outboard sidewalls of the cabin.

A plurality of rows of seats 24, 26 are arranged on the floor surface 28 of the aircraft cabin. The rows of seats 24, 26 are arranged on laterally opposite sides of the cabin and define a central aisle 32. The aisle 32 extends longitudinally through the cabin across the floor surface 28 between the front 14 and rear 16 of the cabin and between the rows of seats 24, 26. Although only one aisle is shown extending the length of the cabin, there could be multiple aisles separating the rows of seats and extending through the length of the cabin.

A cross aisle 36 extends laterally across the rear 16 of the cabin. The cross aisle 36 may extend between a pair of aft most boarding doorways 38, 42 in the respective first 18 and second 22 sidewalls of the aircraft cabin. The aisle 32 extending between the rows of seats 24, 26 intersects the cross aisle 36. Thus, passengers boarding and exiting the aircraft through the aft boarding doorways 38, 42 walk along both the central aisle 32 and cross aisle 36.

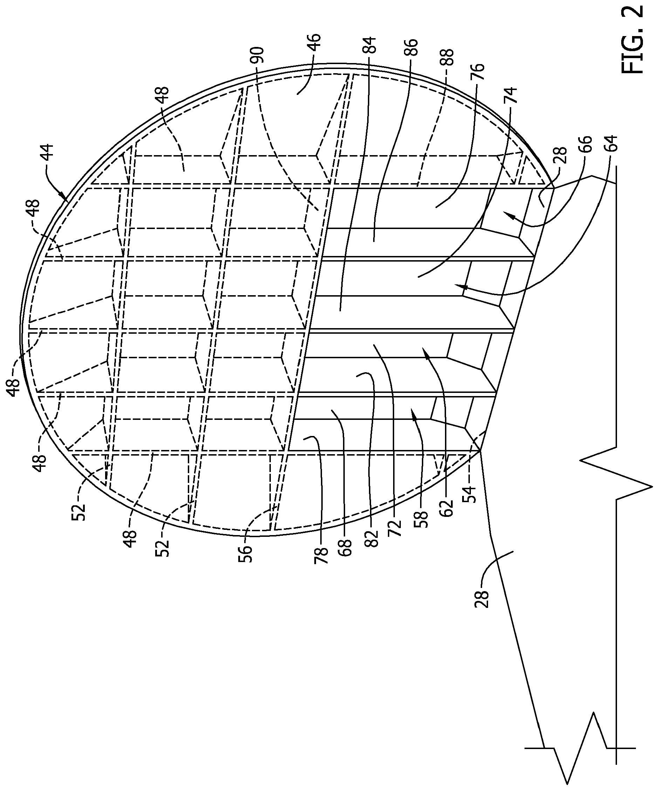

The aircraft may be provided with a modified aft pressure bulkhead 44. The bulkhead 44 may include a pressure wall and a interconnected support structure configured to attach to the aircraft fuselage barrel. In a preferred embodiment the pressure wall surface 46 may be continuous and extend vertically upwardly from the floor surface 28 and laterally across the rear of the aircraft cabin between the first 18 and second 22 outboard sidewalls of the aircraft cabin. Referring to Figure 2 , the aft pressure bulkhead 44 may comprise a plurality of vertically oriented support members or beams 48 that are secured to the top and bottom of the aircraft fuselage, and a plurality of horizontally oriented support members or beams 52 that are secured to the opposite sides of the aircraft fuselage. The interconnecting beams 48, 52 shown in Figure 2 are also secured together, forming a rigid structural framework of the aft pressure bulkhead 44. The pressure wall 46 is preferably attached to the interconnected support structure to form a rigid pressure wall structure. The vertically oriented beams 48 may be spaced approximately 12 inches (0.3 meters) from each other. A lower horizontal beam 54 and a horizontal beam 56 immediately above the lower beam are spaced approximately 40 inches (1 meter) from each other. This spacing of the vertical beams 48 and the bottom two horizontal beams 54, 56 defines four upright rectangular, voids or volumes between the beams. In other embodiments of the aft pressure bulkhead the spacing distances between the beams could be varied and the number of voids left between the beams could be varied.

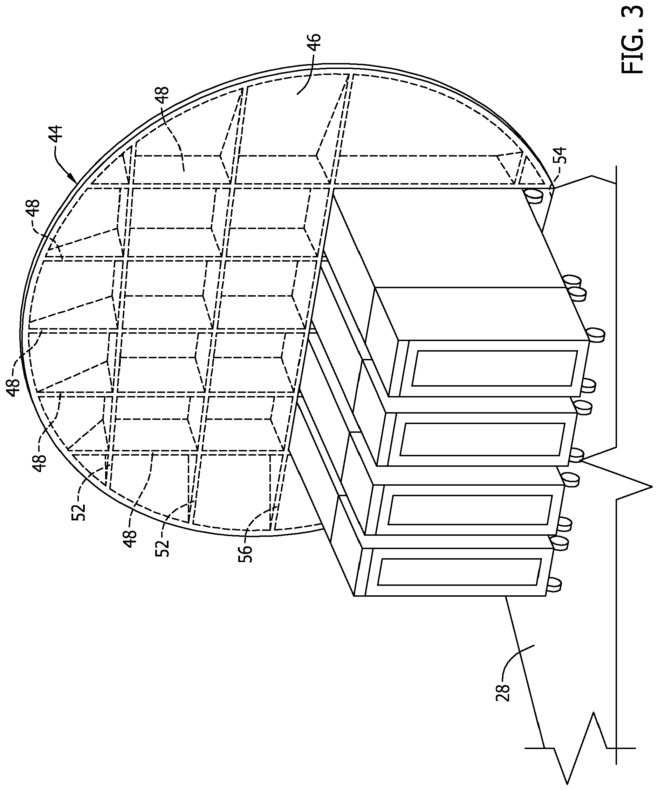

As shown in Figure 3, the pressure wall surface 46 of the bulkhead has been modified with a large recessed chamber or cavity that extends rearwardly through a plane of the wall surface. The cavities 58, 62, 64, 66 extend rearwardly through a plane of the forward wall surface 46 to respective back walls 68, 72, 74, 76 of the cavities. Each of the cavities 58, 62, 64, 66 has the general upright rectangular orientation of the voids between the beams 48, 52 of the aft pressure bulkhead 44. The lateral sides of the cavities 58, 62, 64, 66 are defined by vertically oriented galley walls 78, 82, 84, 86, 88 that are comprised of portions of the vertical beams 48 of the bulkhead 44. Thus, the cavities 58, 62, 64, 66 are formed in the forward wall surface 46 of the aft pressure bulkhead 44 without compromising the structural integrity of the aft pressure bulkhead.
The cavities 58, 62, 64, 66 are formed in a central area of the wall surface 46 just above the floor surface 28 of the aircraft cabin. As shown in Figure 2, a top panel 90 comprising one of the horizontal beams 56 extends over the cavities and a portion of the floor surface 92 extends rearwardly of the wall surface 46 and into the cavities 58, 62, 64, 66. The cavities 58, 62, 64,66 thereby increase the floor surface of the aircraft.
Referring to Figure 2, the cavities 58, 62, 64, 66 are longitudinally aligned with a galley 92 of the aircraft cabin. The dimensions of the cavities 58, 62, 64, 66 correspond with those of galley cart compartments 94, 96, 98, 102 of the galley 92. As shown in Figure 3, the cavities 58, 62, 64, 66 are dimensioned to receive rearward portions of four galley carts 104, 106,108, 112 that are rolled on the floor surfaces 28, 90 and into the cavities. This enables the galley 92 to be moved rearwardly in the aircraft cabin rear 16 increasing floor space in front of the galley. The galley 92 is positioned entirely rearwardly of the cross-aisle 36 and the aft most boarding doorways 38, 42 at the laterally opposite ends of the cross-aisle.

The rearward extension of the galley 92 into the cavities 58, 62, 64, 66 of the modified aft pressure bulkhead 44 increases the floor space 28 of the aircraft cabin and improves passenger access to the aft most boarding doors 38, 48 of the aircraft. The galley may further include a wall that extends adjacent to the aft bulkhead and extends into the cavities of the bulkhead.

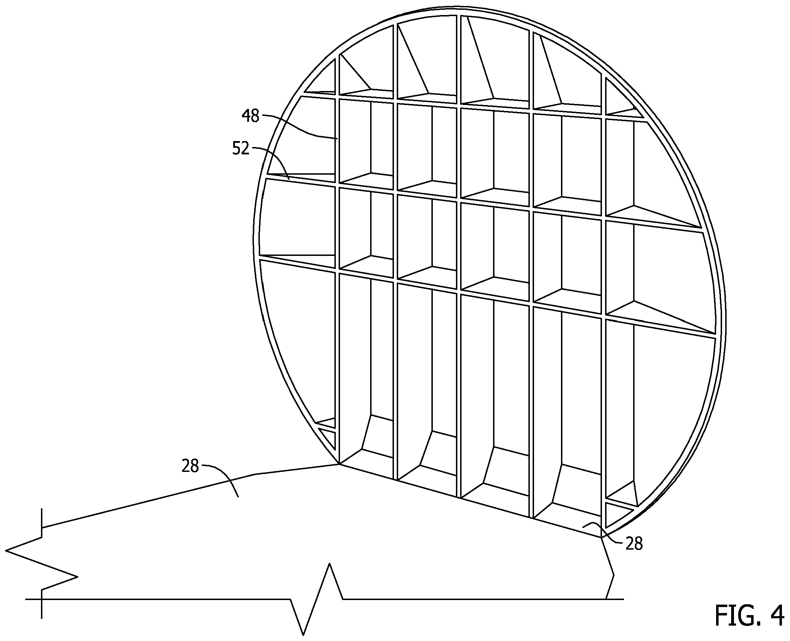

In a further embodiment of aft pressure bulkhead as shown in Figure 4, the wall surface could be a rearward wall surface supported on the bulkhead beams 48, 52 behind the vertically oriented beams and horizontally oriented beams. In this configuration the wall may be substantially flat and continuous across the bulkhead area while the beams remain spaced apart to provide the needed volume for extending the floor space and positioning the galley carts.

As various modifications could be made in the construction of the invention herein described and illustrated without departing from the scope of the invention, it is intended that all matter contained in the foregoing description or shown in the accompanying drawings shall be interpreted as illustrative rather than limiting. Thus, the breadth and scope of the present invention should not be limited by any of the above described exemplary embodiments, but should be defined only in accordance with the following claims appended hereto.

## Claims

1. An aircraft comprising:
a fuselage having a cabin and a galley (92) in a rear (16) of the cabin;
an aft pressure bulkhead (44) at a rear of the aircraft fuselage, the aft pressure bulkhead including a wall (46) extending laterally across the rear of the aircraft fuselage between first (18) and second (22) outboard sidewalls of the cabin, and at least two support members extending vertically (48) and separated by a horizontal support member (52), the vertical and horizontal support members defining a volume (58, 62, 64, 66) sufficient to accept a portion of a galley cart (104, 106, 108, 112); and wherein
the aircraft further comprises a plurality of vertically oriented members attached to the wall, the members having a plurality of horizontal support members interconnecting the vertical members wherein at least one pair of vertical members and one pair of horizontal support members define the volume; and
the galley has a pair of galley walls (78, 82, 84, 86, 88) on laterally opposite sides of the galley with rearward portions of the pair of galley walls extending rearwardly through the aft pressure bulkhead forward wall surface and forming laterally opposite sides of a recessed cavity (58, 62, 64, 66) in the aft pressure bulkhead forward wall surface.

2. The aircraft of claim 1 wherein the wall is substantially flat across its area.

3. The aircraft of claim 2 wherein the wall is positioned on an aft side of the support members.

4. The aircraft of any previous claim wherein the wall is continuous across its area and extends orthogonally between support members, the wall defining the volume between the support members the volume sufficient to accept the portion of a galley cart.

5. The aircraft of any previous claim further comprising the galley cart located in the volume between the support members and on a floor surface (28) that extends between the support members.

6. The aircraft of any previous claim further comprising the aft pressure bulkhead having a continuous wall surface having cavities (58, 62, 64, 66) defining a volume between the support members, the wall positioned adjacent to the galley.

7. The aircraft of claim 6 further comprising the galley having the floor surface that extends into the cavities.

8. The aircraft of any previous claim, further comprising:
a pair of aft most boarding doorways (38, 42) in laterally opposite sides of the rear of the aircraft fuselage; and,
a galley cart compartment (94, 96, 98, 102) being positioned entirely rearwardly of the pair of aft most boarding doorways.

9. The aircraft of any previous claim further comprising:
a wall surface being a continuous surface supported by a plurality of structural beams,
the structural beams being positioned such that at least two are at least 0.3 meters (12 inches) apart and connected by two cross beams (54, 56) that are at least 1 meter (40 inches) apart.

10. A method of increasing the floor space in an aircraft cabin comprising:
positioning an aft pressure bulkhead (44) at a rear (16) of the aircraft cabin, the aft pressure bulkhead having a front wall surface (46) extending across the aircraft cabin and extending upwardly from a floor surface (28) of the aircraft cabin, the bulkhead having;
a recessed cavity (58, 62, 64, 66) in the wall surface, the recessed cavity extending rearwardly into the wall surface;
positioning the floor surface into the recessed cavity; and
supporting the aft pressure bulkhead wall surface with vertical beams (48) and positioning the recessed cavity between a pair of the vertical beams.

11. The method of claim 10, further comprising:
extending the floor space rearwardly of the aft pressure bulkhead wall surface.

12. The method of claim 10 or claim 11, further comprising:
temporarily positioning a galley cart (104, 106, 108, 112) in the recessed cavity with a portion of the galley cart extending rearwardly of the aft pressure bulkhead wall surface.

## Patentansprüche

1. Luftfahrzeug mit:
einem Rumpf mit einer Kabine und einer Bordküche (92) in einem Heck (16) der Kabine;
einem hinteren Druckschott (44) an einem Heck des Flugzeugrumpfes, wobei das hintere Druckschott eine Wand (46) aufweist, die sich zwischen einer ersten (18) und einer zweiten (22) äußeren Seitenwand der Kabine seitwärts über das Heck des Flugzeugrumpfes erstreckt, und mindestens zwei Stützelementen, die sich vertikal (48) erstrecken und durch ein horizontales Stützelement (52) getrennt sind, wobei die vertikalen und horizontalen Stützelemente ein Volumen (58, 62, 64, 66) definieren, das ausreicht, um einen Teil eines Bordküchenwagens (104, 106, 108, 112) aufzunehmen; und wobei
das Luftfahrzeug ferner eine Mehrzahl von vertikal ausgerichteten Elementen umfasst, die an der Wand befestigt sind, wobei die Elemente eine Mehrzahl von horizontalen Stützelementen aufweisen, die die vertikalen Elemente miteinander verbinden, wobei mindestens ein Paar von vertikalen Elementen und ein Paar von horizontalen Stützelementen das Volumen definieren; und
die Bordküche ein Paar von Bordküchenwänden (78, 82, 84, 86, 88) auf seitlich gegenüberliegenden Seiten der Bordküche aufweist, wobei sich hintere Abschnitte des Paares von Bordküchenwänden nach hinten durch die vordere Wandfläche des hinteren Druckschotts erstrecken und seitlich gegenüberliegende Seiten eines ausgesparten Hohlraums (58, 62, 64, 66) in der vorderen Wandfläche des hinteren Druckschotts bilden.

2. Luftfahrzeug nach Anspruch 1, bei dem die Wand über ihre Fläche im wesentlichen flach ist.

3. Luftfahrzeug nach Anspruch 2, bei dem die Wand an einer Rückseite der Stützelemente angeordnet ist.

4. Luftfahrzeug nach einem der vorhergehenden Ansprüche, bei dem die Wand über ihre Fläche durchgehend ist und sich orthogonal zwischen Stützelementen erstreckt, wobei die Wand das Volumen zwischen den Stützelementen definiert, das ausreicht, um den Teil eines Bordküchenwagens aufzunehmen.

5. Luftfahrzeug nach einem der vorhergehenden Ansprüche, das ferner den Bordküchenwagen umfasst, der sich in dem Volumen zwischen den Stützelementen und auf einer Bodenfläche (28) befindet, die sich zwischen den Stützelementen erstreckt.

6. Luftfahrzeug nach einem der vorhergehenden Ansprüche, das ferner das hintere Druckschott mit einer durchgehenden Wandoberfläche mit Hohlräumen (58, 62, 64, 66) umfasst, die ein Volumen zwischen den Stützelementen definieren, wobei die Wand benachbart zur Bordküche angeordnet ist.

7. Luftfahrzeug nach Anspruch 6, das ferner die Bordküche mit der Bodenfläche umfasst, die sich in die Hohlräume erstreckt.

8. Luftfahrzeug nach einem der vorhergehenden Ansprüche, das ferner umfasst:
ein Paar hinterste Bordtüren (38, 42) an sich seitlich gegenüberliegenden Seiten des hinteren Teils des Flugzeugrumpfes; und
ein Bordküchenwagenabteil (94, 96, 98, 102), das vollständig hinter dem Paar der hintersten Bordtüren positioniert ist.

9. Luftfahrzeug nach einem der vorhergehenden Ansprüche, das ferner umfasst:
eine Wandfläche, die eine von mehreren Tragbalken getragene durchgehende Fläche ist,
wobei die Tragbalken so positioniert sind, dass mindestens zwei mindestens 0,3 Meter (12 Zoll) voneinander entfernt sind und durch zwei Querträger (54, 56) verbunden sind, die mindestens 1 Meter (40 Zoll) voneinander entfernt sind.

10. Verfahren zum Vergrößern der Bodenfläche in einer Flugzeugkabine mit den Schritten:
Positionieren eines hinteren Druckschotts (44) an einem Heck (16) der Flugzeugkabine, wobei das hintere Druckschott eine vordere Wandfläche (46) aufweist, die sich quer durch die Flugzeugkabine erstreckt und sich von einer Bodenfläche (28) der Flugzeugkabine nach oben erstreckt,
wobei das Schott aufweist:
einen vertieften Hohlraum (58, 62, 64, 66) in der Wandfläche, wobei sich der vertiefte Hohlraum nach hinten in die Wandfläche erstreckt;
Positionieren der Bodenfläche in dem vertieften Hohlraum; und
Abstützen der hinteren Druckschottwandfläche mit vertikalen Trägern (48) und Positionieren des vertieften Hohlraums zwischen einem Paar der vertikalen Träger.

11. Verfahren nach Anspruch 10, ferner mit dem Schritt:
Verlängern des Bodenraums hinter die Wandfläche des hinteren Druckschotts.

12. Verfahren nach Anspruch 10 oder Anspruch 11, ferner mit dem Schritt:
zeitweiliges Positionieren eines Bordküchenwagens (104, 106, 108, 112) in dem vertieften Hohlraum, wobei ein Teil des Bordküchenwagens sich hinter der Wandfläche des hinteren Druckschotts erstreckt.

## Revendications

1. Aéronef comprenant :
un fuselage ayant une cabine et un office (92) à l'arrière (16) de la cabine ;
une cloison de pressurisation arrière (44) au niveau d'un arrière du fuselage d'aéronef, la cloison de pressurisation arrière comprenant une paroi (46) s'étendant latéralement à travers l'arrière du fuselage d'aéronef entre des première (18) et seconde (22) parois latérales extérieures de la cabine, et au moins deux éléments de support s'étendant verticalement (48) et séparés par un élément de support horizontal (52), les éléments de support verticaux et horizontal définissant un volume (58, 62, 64, 66) suffisant pour accepter une partie d'un chariot d'office (104, 106, 108, 112) ; et dans lequel
l'aéronef comprend en outre une pluralité d'éléments orientés verticalement fixés à la paroi, les éléments ayant une pluralité d'éléments de support horizontaux interconnectant les éléments verticaux, dans lequel au moins une paire d'éléments verticaux et une paire d'éléments de support horizontaux définissent le volume ; et
l'office a une paire de parois d'office (78, 82, 84, 86, 88) sur des côtés latéralement opposés de l'office avec des parties arrière de la paire de parois d'office s'étendant vers l'arrière à travers la surface de paroi avant de cloison de pressurisation arrière et formant des côtés latéralement opposés d'une cavité en retrait (58, 62, 64, 66) dans la surface de paroi avant de cloison de pressurisation arrière.

2. Aéronef selon la revendication 1, dans lequel la paroi est sensiblement plate sur sa surface.

3. Aéronef selon la revendication 2, dans lequel la paroi est positionnée sur un côté arrière des éléments de support.

4. Aéronef selon l'une quelconque des revendications précédentes, dans lequel la paroi est continue sur toute sa surface et s'étend orthogonalement entre des éléments de support, la paroi définissant le volume entre les éléments de support, le volume étant suffisant pour accepter la partie d'un chariot d'office.

5. Aéronef selon l'une quelconque des revendications précédentes, comprenant en outre le chariot d'office situé dans le volume entre les éléments de support et sur une surface de plancher (28) qui s'étend entre les éléments de support.

6. Aéronef selon l'une quelconque des revendications précédentes, comprenant en outre la cloison de pressurisation arrière ayant une surface de paroi continue ayant des cavités (58, 62, 64, 66) définissant un volume entre les éléments de support, la paroi étant positionnée adjacente à l'office.

7. Aéronef selon la revendication 6, comprenant en outre l'office ayant la surface de plancher qui s'étend dans les cavités.

8. Aéronef selon l'une quelconque des revendications précédentes, comprenant en outre :
une paire de portes d'embarquement les plus à l'arrière (38, 42) sur des côtés latéralement opposés de l'arrière du fuselage d'aéronef ; et,
un compartiment de chariot d'office (94, 96, 98, 102) positionné entièrement vers l'arrière de la paire de portes d'embarquement les plus à l'arrière.

9. Aéronef selon l'une quelconque des revendications précédentes, comprenant en outre :
une surface de paroi étant une surface continue supportée par une pluralité de poutres structurelles,
les poutres structurelles étant positionnées de manière à ce qu'au moins deux soient espacées d'au moins 0,3 mètre (12 pouces) et reliées par deux poutres transversales (54, 56) espacées d'au moins 1 mètre (40 pouces).

10. Procédé pour augmenter l'espace de plancher dans une cabine d'Aéronef, comprenant les étapes consistant à :
positionner une cloison de pressurisation arrière (44) au niveau d'un arrière (16) de la cabine d'aéronef, la cloison de pressurisation arrière ayant une surface de paroi avant (46) s'étendant à travers la cabine d'aéronef et s'étendant vers le haut à partir d'une surface de plancher (28) de la cabine d'aéronef, la cloison ayant ;
une cavité en retrait (58, 62, 64, 66) sur une surface de paroi, la cavité en retrait s'étendant vers l'arrière jusque dans la surface de paroi ;
positionner la surface de plancher dans la cavité en retrait ; et
supporter la surface de paroi de cloison de pressurisation arrière avec des poutres verticales (48) et positionner la cavité en retrait entre une paire des poutres verticales.

11. Procédé selon la revendication 10, comprenant en outre l'étape consistant à :
étendre l'espace de plancher vers l'arrière de la surface de paroi de cloison de pressurisation arrière.

12. Procédé selon la revendication 10 ou la revendication 11, comprenant en outre l'étape consistant à :
positionner temporairement un chariot d'office (104, 106, 108, 112) dans la cavité en retrait avec une partie du chariot d'office s'étendant vers l'arrière de la surface de paroi de cloison de pressurisation arrière.
